# EUROPEAN PATENT APPLICATION

(11) **EP 2 602 690 A1**
(43) Date of publication of application: **12.06.2013**
(21) Application number: 12167086.3
(22) Date of filing: 08.05.2012
(51) Int. Cl.: G06F 1/32

(54) **Method for starting application smartly and power-efficiently**

(30) Priority: 06.12.2011 TW 100144876
(71) Applicant: Askey Technology (Jiangsu) Ltd., Economic-Technological Development Area Wujiang Jiangsu (CN); Askey Computer Corp., New Taipei City 235 (TW)
(72) Inventor: Cheng, Chang Wen, 350 Miaoli County (TW); Hsieh, Ching-Feng, 108 Taipei City (TW)
(74) Representative: Bonvicini, Davide

(57) **Abstract**

A method for starting an application smartly and power-efficiently is applicable to a portable electronic device installed with an application and hardware. The portable electronic device receives a voltage generated from a power supply, such as an internal battery power or an external power. After the portable electronic device has started, a connection between the application and the hardware is created. Upon detection that the voltage originates from the external power, the application is executed based on a preset schedule to start the hardware corresponding to the application until it is detected that the source of the voltage has been switched to the internal battery power. Upon the detection that the source of the voltage has been switched to the internal battery power, a user determines whether to change the state of use of the hardware, thereby rendering the portable electronic device smart and power-efficient.

## Description

### FIELD OF THE INVENTION

The present invention relates to methods for starting an application, and more particularly, to a method for starting an application smartly and power-efficiently.

### BACKGROUND OF THE INVENTION

According to related prior art, a portable electronic device is equipped with a combination of multifunction hardware devices or components, such as chips, in order to execute a robust application, wherein a voltage required for operation of the portable electronic device is mainly supplied by an internal battery power and/or by an external power. The hardware devices or components of the portable electronic device account mostly for the consumption of the voltage.

For example, the portable electronic device comprises chips capable of high-speed processing, such as chips dedicated to network communication exchange or display chips. The aforesaid chips are more power-consuming than the other hardware devices or components of the portable electronic device. Unless the external power supplies the required voltage, it will be impossible for the portable electronic device to operate for a long period of time. By contrast, it is impossible for the portable electronic device to operate for a long period of time, using solely the voltage supplied by the internal battery power.

Conventional portable electronic devices allow a user to decide whether to enable highly power-consuming hardware devices or components, such as a built-in chip, such that the user is in control of the consumption of the voltage with a view to consuming the voltage in a power-efficient manner. However, a user cannot control the hardware devices or components without following a complicated procedure. Furthermore, a user has to perform a switching operation on the portable electronic device repeatedly in order to switch the portable electronic device between different voltage sources. The above-mentioned brings inconvenience to the user.

In view of the aforesaid drawbacks of the prior art, the present invention provides a method for starting an application smartly and power-efficiently so as to overcome the aforesaid drawbacks of the prior art.

### SUMMARY OF THE INVENTION

It is an objective of the present invention to provide a method for starting an application smartly and power-efficiently such that a portable electronic device operating with the method consumes power efficiently and smartly.

Another objective of the present invention is to provide a method for starting an application smartly and power-efficiently such that a portable electronic device operating with the method starts automatically and smartly.

In order to achieve the above and other objectives, the present invention provides a method for starting an application smartly and power-efficiently, applicable to a portable electronic device installed with an application and hardware, the portable electronic device receiving a voltage generated from at least one of an internal battery power and an external power, the method comprising the steps of: (a) starting the portable electronic device through the voltage to create a connection between the application and the hardware, allowing the portable electronic device to record a state of use of the hardware with a hardware status table; (b) identifying the voltage source and, after identifying the voltage source as the external power, executing the application based on a preset schedule stored in the portable electronic device to start the hardware and updating the state of use of the hardware started by execution of the application and recorded in the hardware status table, the preset schedule being a schedule of execution of the application; and (c) determining whether a state of power supply to the portable electronic device allows the voltage to be supplied by the external power, wherein a negative determination is followed by a step of selectively keeping the state of use of the hardware and step (b).

Unlike the prior art, the present invention provides a method for starting an application smartly and power-efficiently so as to identify a voltage source (as an internal battery power or an external power, for example,) smartly and thereby determine whether to execute the application in order to start the highly power-consuming hardware.

In an embodiment, the determination whether to execute the applications as scheduled in a preset schedule stored in the portable electronic device depends smartly on the outcome of the identification of the voltage source. If the voltage source is identified as the external power, the portable electronic device will execute the applications scheduled in the preset schedule and start the highly power-consuming hardware corresponding to the application, without considering consumption of voltage. By contrast, if the voltage source is identified as the internal battery power, that is, the voltage is only supplied by the internal battery power, users can flexibly decide whether to keep the state of use of the hardware so as to start the application in a smart and power-saving manner.

### BRIEF DESCRIPTION OF THE DRAWINGS

Objectives, features, and advantages of the present invention are hereunder illustrated with specific embodiments in conjunction with the accompanying drawings, in which:
FIG. 1 is a flow chart of a method for starting an application smartly and power-efficiently according to the first embodiment of the present invention;
FIG. 2 is a flow chart of the method for starting an application smartly and power-efficiently according to the second embodiment of the present invention; and
FIG. 3 is a flow chart of the method for starting an application smartly and power-efficiently according to the third embodiment of the present invention.

### DETAILED DESCRIPTION OF THE PREFERRED EMBODIMENTS

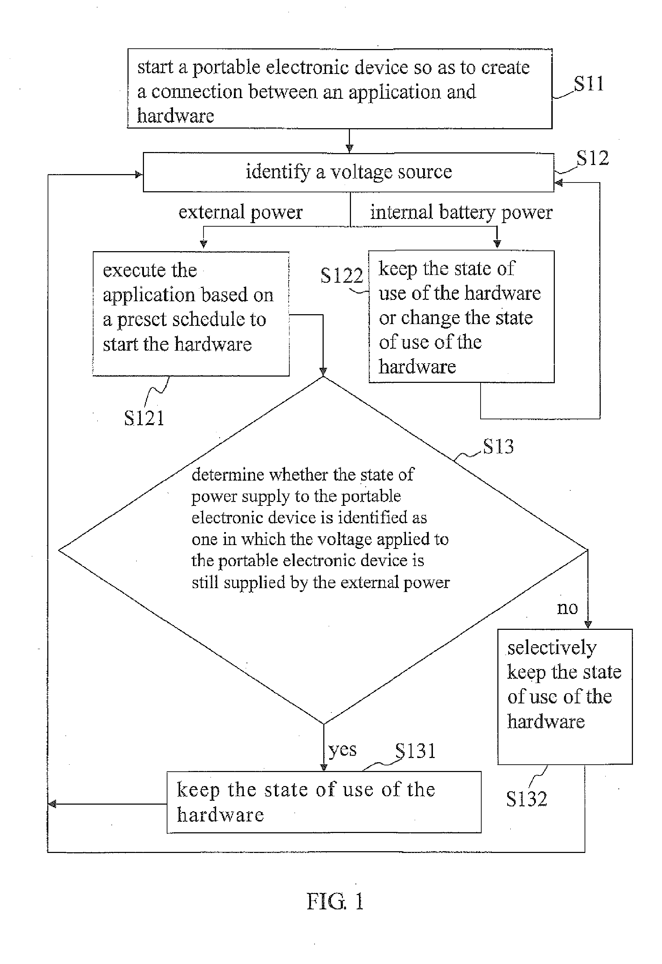

Referring to FIG. 1, there is shown a flow chart of a method for starting an application smartly and power-efficiently according to the first embodiment of the present invention. As shown in FIG. 1, the method for starting an application smartly and power-efficiently is for use with a portable electronic device installed with an application and hardware. The portable electronic device receives a voltage generated from an internal battery power or an external power. The application is herein defined as one that drives directly or indirectly an application of the hardware, such as a Wi-Fi application, a mobile network continuation application, a screen display control application, or a power-saving mode application. Furthermore, the hardware herein is defined as one related to the application, such as a communication chip and/or a display chip (for example, a mobile network chip (like 3G, 3.5G, 4G mobile communication chips), a Wi-Fi communication chip, a Bluetooth communication chip, or a display control chip.) Communication-related hardware devices or components (or chips) of the portable electronic device consume more power than the other hardware devices or components of the portable electronic device. The built-in battery power is a battery or a cell disposed in the portable electronic device or an external battery pack. The power, mainly utility power, from the external power is converted, by means of a transformer or a rectifier, into the voltage supplied to the portable electronic device.

A process flow of the method for starting an application smartly and power-efficiently begins with step S11. Step S11 involves starting a portable electronic device through the voltage to create a connection between an application and hardware, allowing the portable electronic device to record a state of use of the hardware with a hardware status table. In this regard, the portable electronic device starts by the voltage generated from the internal battery power, the external power, or a combination thereof. After the portable electronic device has started, a mutual connection between the application and the hardware in the portable electronic device is created, such that the portable electronic device can control the hardware through the application.

Upon the creation of the connection, the portable electronic device records a state of use of the hardware in the hardware status table positioned on the portable electronic device, such that the portable electronic device keeps track of the current state of use of the hardware by means of the hardware status table. That is to say, given the hardware status table, the portable electronic device can confirm the state of use (for example, on, off, standby, or hibernation) of the hardware.

In an embodiment, if the hardware status table shows the "on" state of use, it indicates that the hardware is operating and thus the hardware is consuming the voltage; by contrast, if the hardware status table shows the "off" state of use, it indicates that the hardware is either not operating or shut down and thus the hardware is consuming little or even no voltage.

In another embodiment, it is feasible that, as shown in the hardware status table, the state of use of the hardware is set to off beforehand, so as to prevent the voltage from suffering a great loss as soon as the portable electronic device starts. That is to say, if the state of use of the portable electronic device is set to on before the portable electronic device identifies the voltage source, the hardware will start and begin to consume power supplied by the voltage source as soon as the portable electronic device starts.

Step S12 involves identifying the voltage source. If, in step S12, the voltage source is identified as the external power, step S12 will be followed by step S121. If, in step S12, the voltage source is identified as the internal battery power, step S12 will be followed by step S122.

Step S121, which is premised on identifying the voltage source as the external power, entails executing the application based on a preset schedule stored in the portable electronic device to start the hardware and updating the state of use of the hardware started by execution of the application and recorded in the hardware status table. The preset schedule is a schedule of execution of the application and is stored in the portable electronic device. That is to say, if in step S12 the voltage source is identified as the external power, in step S121 the portable electronic device will execute the application in accordance with the preset schedule, drive the hardware related to the application, and update the state of use of the hardware as recorded in the hardware status table in real time.

Step S122, which is premised on identifying the voltage source as the internal battery power, entails keeping or changing the state of use of the hardware. After keeping or changing the state of use of the hardware, the process flow of the method continues with the step of identifying the voltage source, that is, step S12.

Step S13 involves determining whether the state of power supply to the portable electronic device is identified as one in which the voltage applied to the portable electronic device is still supplied by the external power, which means determining whether the voltage source is still the external power. In short, the purpose of step S13 is to identify the state of power supply (see below for a description of three options of the state of power supply) to the portable electronic device. An affirmative determination causes the process flow of the method to go to step S131. A negative determination causes the process flow of the method to go to step S 132.

The state of power supply to the portable electronic device, as mentioned above, is one of the following: state 1 in which the portable electronic device and the external power are connected and the external power supplies power (i.e., voltage) to the portable electronic device; state 2 in which the portable electronic device and the external power are connected but the external power does not supply power (i.e., voltage) to the portable electronic device; and state 3 in which the portable electronic device and the external power are not connected and it is impossible for the portable electronic device to receive voltage from the external power.

As mentioned above, if, in step S13, the state of power supply to the portable electronic device is identified as one in which the voltage applied to the portable electronic device is still supplied by the external power, the process flow of the method will go to step S131, otherwise the process flow of the method will go to step S132. Step S131 entails keeping the state of use of the hardware; meanwhile, the process flow of the method goes to step S12 (identifying the voltage source). That is to say, in step S131, the state of use of the hardware remains unchanged, because the voltage applied to the portable electronic device is still supplied by the external power. For example, regarding the state of use of the hardware, in a situation where the hardware is a communication chip and the portable electronic device is connected to the Internet through the communication chip, if the voltage source is identified as the external power, the state of use of the hardware will remain unchanged, that is, the portable electronic device will still be connected to the Internet through the communication chip rather than shut down the communication chip.

Step S132 entails selectively keeping the state of use of the hardware, for example, a user decides whether to keep or change the current state of use of the hardware. In an embodiment, once the voltage source switches from the external power to the internal battery power, the portable electronic device will inform the user of the transition, thereby allowing the user to decide the state of use of the communication chip anew, that is, deciding whether to keep connecting the portable electronic device to the Internet through the communication chip or stop connecting the portable electronic device to the Internet through the communication chip.

Despite their opposite outcomes (i.e., keep the hardware operating, and shut down the hardware, respectively), both step S131 and step S132 are followed by step S12 (identifying the voltage source). Hence, step S12 is an ongoing step from its commencement.

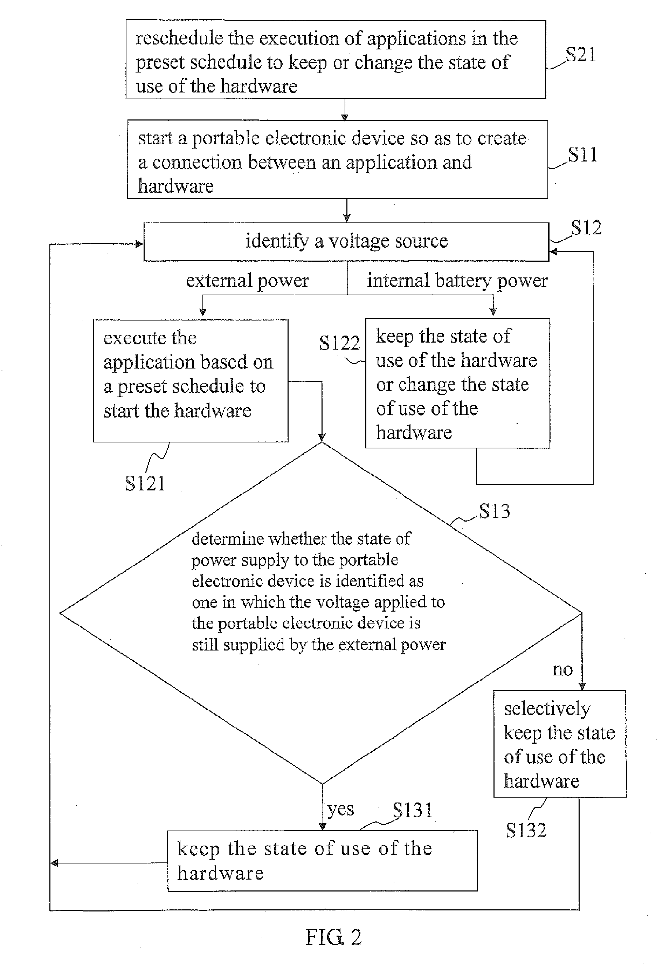

Referring to FIG. 2, there is shown a flow chart of the method for starting an application smartly and power-efficiently according to the second embodiment of the present invention. As indicated by FIG. 2, the method in the second embodiment is distinguished from the method in the first embodiment by step S21 which precedes step S11. Step S21 involves rescheduling the execution of applications in the preset schedule and thereby allowing the portable electronic device to keep or change the state of use of the hardware by executing the applications as scheduled. The preset schedule is present (i.e., stored in the portable electronic device) before step S21 and is revised in step S21 to reschedule the execution of applications. The determination whether to execute the applications depends on step S13, that is, both the affirmative determination and the negative determination of step S13 are taken into account. To make the description herein clear and succinct, execution of the applications scheduled in the preset schedule is described herein by considering the affirmative determination only.

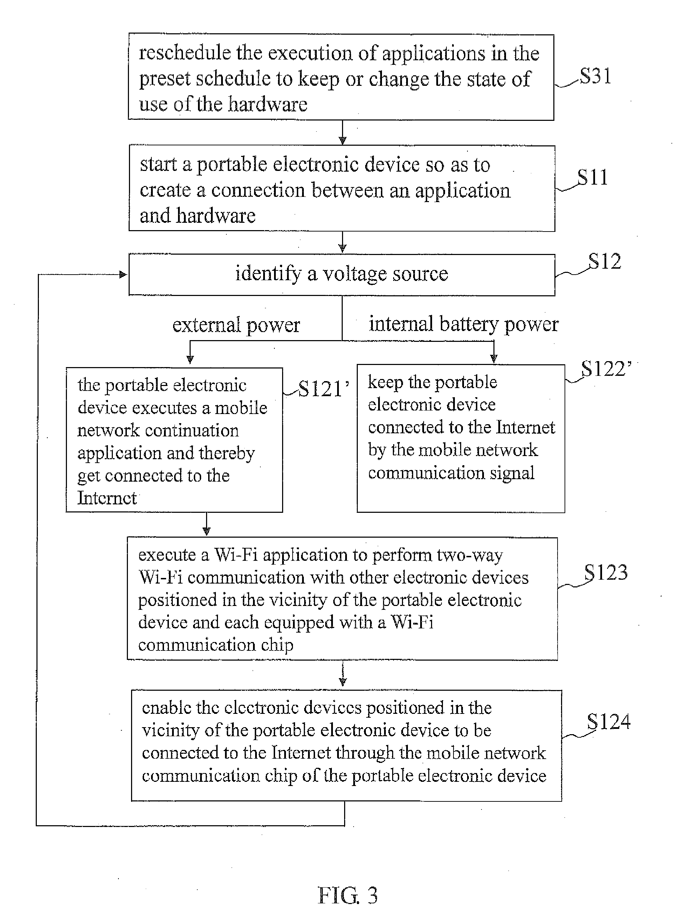

Referring to FIG. 3, there is shown a flow chart of the method for starting an application smartly and power-efficiently according to the third embodiment of the present invention. As shown in FIG. 3, the method for starting an application smartly and power-efficiently is exemplified by specific applications, namely a Wi-Fi application and/or a mobile network continuation application. The Wi-Fi application and the mobile network continuation application work in conjunction with a Wi-Fi communication chip and a mobile network communication chip, respectively.

Step S31 in the third embodiment illustrated with FIG. 3 is basically similar to step S21 in the second embodiment illustrated with FIG. 2, except that step S31 involves revising the preset schedule to cause the portable electronic device to start the mobile network communication chip and generate a mobile network communication signal after the portable electronic device has executed the mobile network continuation application.

Step S11 in the third embodiment illustrated with FIG. 3 is the same as step S11 in the first and second embodiments and thus is not described again for the sake of brevity.

In the third embodiment illustrated with FIG. 3, step S12 involves identifying the voltage source. If, in step S12, the voltage source is identified as the external power, step S12 will be followed by step S121'. If, in step S12, the voltage source is identified as the internal battery power, step S12 will be followed by step S122'.

In step S121', the portable electronic device executes the mobile network continuation application based on the preset schedule and gets connected to the Internet through the mobile network communication signal generated.

Step S122' involves keeping the state of use of the mobile network communication chip in operation and keeping the portable electronic device connected to the Internet by the mobile network communication signal, or involves changing the state of use of the mobile network communication chip in operation and shutting down the mobile network communication chip to stop connecting the portable electronic device to the Internet. This step is followed by step S12.

Step S31 further comprises a sub-step of including in the preset schedule generating the mobile network communication signal, executing step S121', and executing step S123 whereby the portable electronic device executes the Wi-Fi application again to start the Wi-Fi communication chip and generate a radio communication signal. In this sub-step, two-way Wi-Fi communication takes place between the radio communication signal generated by the Wi-Fi communication chip and other electronic devices positioned in the vicinity of the portable electronic device and each equipped with a Wi-Fi communication chip.

In yet another embodiment, step S31 further comprises a sub-step of including in the preset schedule generating the radio communication signal, executing an access point mode in the Wi-Fi application by the portable electronic device such that the Wi-Fi communication chip can send the mobile network communication signal to other electronic devices each equipped with a Wi-Fi communication chip, executing step S123, and executing step S124, such that the electronic devices positioned in the vicinity of the portable electronic device can be connected to the Internet through the mobile network communication chip of the portable electronic device.

Accordingly, a method for starting an application smartly and power-efficiently according to the present invention identifies a voltage source (as an internal battery power or an external power) smartly and thereby determines whether to execute an application in order to start highly power-consuming hardware.

The present invention is disclosed above by preferred embodiments.

However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A method for starting an application smartly and power-efficiently, applicable to a portable electronic device installed with an application and hardware, the portable electronic device receiving a voltage generated from at least one of an internal battery power and an external power, the method comprising the steps of:
(a) starting the portable electronic device through the voltage to create a connection between the application and the hardware, allowing the portable electronic device to record a state of use of the hardware with a hardware status table;
(b) identifying the voltage source and, after identifying the voltage source as the external power, executing the application based on a preset schedule stored in the portable electronic device to start the hardware and updating the state of use of the hardware started by execution of the application and recorded in the hardware status table, the preset schedule being a schedule of execution of the application; and
(c) determining whether a state of power supply to the portable electronic device allows the voltage to be supplied by the external power, wherein a negative determination is followed by a step of selectively keeping the state of use of the hardware and step (b).

2. The method of claim 1, wherein identifying the voltage source as the internal battery power in step (b) is followed by selectively keeping the state of use of the hardware and continuing the step of identifying the voltage source.

3. The method of claim 1, wherein, in step (a), the state of use of the hardware in the hardware status table is set to off beforehand.

4. The method of claim 1, further comprising step (d) of rescheduling the execution of applications in the preset schedule and thereby allowing the portable electronic device to keep or change the state of use of the hardware by executing the applications as scheduled.

5. The method of claim 4, wherein, in step (a), the application is at least one of a Wi-Fi application, a mobile network continuation application, a screen display control application, and a power-saving mode application.

6. The method of claim 5, wherein, in step (a), the hardware is at least one of a Wi-Fi communication chip, a mobile network communication chip, and a display control chip.

7. The method of claim 6, wherein step (d) further comprises a sub-step of including in the preset schedule executing the mobile network continuation application by the portable electronic device, starting the mobile network communication chip, and generating a mobile network communication signal.

8. The method of claim 7, wherein, after step (d), step (e) involves executing the Wi-Fi application based on the preset schedule by the portable electronic device so as to drive the Wi-Fi communication chip to generate a radio communication signal.

9. The method of claim 8, wherein, after step (e), step (f) involves including in the preset schedule executing an access point mode in the Wi-Fi application by the portable electronic device, thereby allowing the Wi-Fi communication chip to broadcast the mobile network communication signal.
